# EUROPEAN PATENT APPLICATION

(11) **EP 4 793 753 A1**
(43) Date of publication of application: **19.08.2026**
(21) Application number: 26158251.4
(22) Date of filing: 12.02.2026
(51) Int. Cl.: G06F 3/16, G06F 40/30, G10L 15/18, G10L 15/22, H04N 21/422

(54) **DISPLAY DEVICE FOR PROVIDING GENERATIVE AI SCREEN BASED ON USER UTTERANCE**

(30) Priority: 13.02.2025 KR 20250018937; 29.05.2025 WO PCT/KR2025/007376
(71) Applicant: LG Electronics Inc., Yeongdeungpo-gu Seoul 07336 (KR)
(72) Inventor: KIM, Yunam, 07796 Seoul (KR); KIM, Yeonjin, 07796 Seoul (KR)
(74) Representative: Vossius & Partner Patentanwälte Rechtsanwälte mbB

(57) **Abstract**

A display device for providing a generative AI screen based on a user utterance can include a voice recognition processing module configured to receive a user utterance following a key input of a specific button into a remote control device; a display configured to display a generative AI execution screen associated with the user utterance; and a processor configured to determine the utterance intent of the user utterance and display a generative AI execution screen corresponding to the utterance intent on the display.

## Description

### BACKGROUND

### 1. Field

The present disclosure relates to a display device for providing a generative AI screen based on a user utterance. More specifically, the present disclosure relates to an AI system including a display device and a server for providing a generative AI screen based on a user utterance.

### 2. Description of the Related Art

Recently, the provision of various services utilizing generative artificial intelligence (AI)-based applications has been rapidly increasing. Generative AI applications are artificial intelligence (AI)-based applications for generating new content, such as text, images, audio, and video, according to a user request. These AI-based applications are spreading across various fields, including a digital TV.

For example, a user can make a request to generate a desired image by executing an AI application on a display device such as a digital TV. In this regard, the user can execute an AI application using a remote control or through a user utterance. However, in a conventional generative AI application execution method, there is an issue that requires an additional input after executing the AI application in order to execute an operation corresponding to the user's intent. Due to this, the user has the inconvenience of having to select a separate additional option to execute the AI application and move to a detailed screen associated with the user's intent.

In addition, in terms of diversity, there is an issue that is difficult for the user to write a diverse and detailed prompt when inputting the prompt in order to generate an image desired by the user. Due to this, the generated image can be monotonous and limited. In addition, in terms of efficiency, there is an issue in which a preference for each user, for example, the user's preferred image style, must be repeatedly input each time the prompt is written.

### SUMMARY

The present disclosure aims to solve the aforementioned problems and other problems, and is intended to provide an AI system including a display device and a server for providing a generative AI screen according to the content of utterance.

The present disclosure is intended to solve an issue that requires an additional input after executing an AI application to execute an operation corresponding to a user's intent when requesting the generation of a desired image by executing an AI application on a display device such as a digital TV.

The present disclosure is intended to solve an issue that takes a long time for the user to input a prompt and is difficult to operate due to the limitation to an input method for a digital TV in terms of convenience.

The present disclosure is intended to solve an issue that is difficult for the user to write a diverse and detailed prompt when inputting the prompt in terms of diversity.

The present disclosure is intended to solve an issue in which a preference for each user, for example, the user's preferred image style, must be repeatedly input each time the prompt is written in terms of efficiency.

A display device for providing a generative AI screen based on a user utterance according to the present disclosure can include a voice recognition processing module configured to receive a user utterance following a key input of a specific button into a remote control device; a display configured to display a generative AI execution screen associated with the user utterance; and a processor configured to determine the utterance intent of the user utterance and display a generative AI execution screen corresponding to the utterance intent on the display, wherein the processor determines whether a specific intent associated with generative AI and a named entity associated with the specific intent are identified in the user utterance, and displays a first generative AI execution screen in a first generative AI execution mode or a second generative AI execution screen in a second generative AI execution mode on the display according to a result of the determination.

According to an embodiment, the processor can display, when both the specific intent and the named entity associated with the specific intent are identified in the user utterance, the first generative AI execution screen on the display, and display, when only the specific intent is identified in the user utterance, the second generative AI execution screen on the display.

According to an embodiment, the processor can include a natural language processing (NLP) client module configured to acquire an utterance intent analysis result for the user utterance in conjunction with a natural language processing (NLP) server, wherein the utterance intent analysis result includes at least one of: an execution item representing an operation to be executed in association with the specific intent; an execution parameter indicating whether the specific intent and the named entity associated with the specific intent are identified in the user utterance; and a prompt corresponding to the user utterance.

According to an embodiment, the processor can further include a generative AI control module and a generative AI output module, wherein the generative AI control module receives the utterance intent analysis result from the NLP client module, and triggers the first generative AI execution mode or the second generative AI execution mode based on the execution item and execution parameter included in the utterance intent analysis result, and the generative AI output module displays, in response to a trigger for the first generative AI execution mode or the second generative AI execution mode, a generative AI execution screen corresponding to each mode on the display.

According to an embodiment, the generative AI control module can trigger, when the execution item is a generative AI execution and the execution parameter is a first execution mode, the first generative AI execution mode by determining that both a specific intent associated with the generative AI execution and a named entity associated with the specific intent are identified in the user utterance, and trigger, when the execution item is a generative AI execution and the execution parameter is a second execution mode, the second generative AI execution mode by determining that only the intent associated with the generative AI execution is identified in the user utterance.

According to an embodiment, the generative AI output module can execute, in response to a trigger for the first generative AI execution mode, a generative AI application to display the first generative AI execution screen related to both the specific intent and the named entity on the display, and execute, in response to a trigger for the second generative AI execution mode, a generative AI application to display the second generative AI execution screen related to the specific intent on the display.

According to an embodiment, the first generation AI execution screen can be an AI image generation guide screen including a prompt corresponding to the user utterance; and a recommended entity keyword list associated with the named entity.

According to an embodiment, the second generation AI execution screen can be an AI image generation idea acquisition screen including one or more recommended words for AI image generation.

According to an embodiment, a keyword corresponding to the named entity can be highlighted in the prompt.

According to an embodiment, the generative AI control module can be further configured to acquire a recommended keyword list associated with the named entity in conjunction with a generative AI server, wherein the generative AI output module transmits, in response to a trigger for the first generative AI execution mode, a recommended keyword request including the named entity prior to displaying the first generative AI execution screen on the display, and the generative AI control module transmits the received recommended keyword request to the generative AI server to generate a recommended keyword list associated with the named entity, receives, in response to the request, a recommended keyword list associated with the named entity from the generative AI server, and transmits the recommended keyword list to the AI output module to be displayed on the display.

According to an embodiment, the recommended keyword list can include at least one of a recommended entity keyword list corresponding to the named entity, a recommended background keyword list associated with the named entity, and a recommended style keyword list associated with the named entity.

According to an embodiment, the generative AI output module can update, when one recommended keyword is selected from the recommended entity keyword list, the prompt by replacing a keyword corresponding to the selected recommended keyword in the prompt with the selected recommended entity keyword, and display the updated prompt on the display.

According to an embodiment, the generative AI output module can update, when one recommended keyword is selected from the recommended background keyword list or the recommended style keyword list, the prompt to further include the selected recommended keyword, and display the updated prompt on the display.

According to an embodiment, the generative AI output module can generate, when one recommended word is selected from among the one or more recommended words, a random prompt associated with the recommended word, and transmit a recommended keyword request including the random prompt to the generative AI control module.

According to an embodiment, the generative AI control module can be further configured to acquire at least one or more highlight keywords and recommended keyword lists based on a random prompt in conjunction with the generative AI server, wherein the generative AI control module transmits the received recommended keyword request to the generative AI server to make a request to determine at least one or more highlight keywords in the random prompt, and generate recommended keyword lists associated with the determined highlight keywords, receives, in response to the request, at least one or more highlight keywords and recommended keyword lists based on the random prompt from the generative AI server, and transmits the one or more highlight keywords and recommended keyword lists to the AI output module, and the generative AI output module highlights parts associated with the highlight keywords in the random prompt and the recommended keyword list, and displays the highlighted random prompt and recommended keyword list on the display.

According to an embodiment, the one or more highlight keywords can include at least one of a first keyword associated with an object included in the random prompt, a second keyword associated with a background included in the random prompt, and a third keyword associated with an image style included in the random prompt, keywords corresponding to the first keyword, the second keyword, and the third keyword in the random prompt can be respectively highlighted in a first color, a second color, and a third color, the recommended keyword list can include at least one of a recommended object keyword list, a recommended background keyword list, and a recommended style keyword list associated with at least one of the first keyword, the second keyword, and the third keyword, and in the recommended keyword list, the recommended object keyword list, the recommended background keyword list, and the recommended style keyword list can be respectively highlighted in the same color as those of the keywords associated therewith.

According to an embodiment, the generative AI control module can generate, in response to a key input or voice input into a remote control device associated with an image generation request, an image generation request including the prompt, transmit the image generation request to the generative AI server so as to generate an AI image based on the prompt, receive, in response to transmitting the image generation request, an image storage location representing a location where the AI image is stored from the generative AI server, access, based on the image storage location, a separate database to download the AI image, and store the downloaded AI image in a database of the display device, and transmit it to the generative AI output module so as to be displayed on the display along with the input prompt.

According to an embodiment, the generative AI output module can display the AI image as a standby screen of the display in response to a key input or voice input into a remote control device associated with a request to set a standby mode.

According to this specification, a customized AI execution screen associated with a user's intent can be provided when generating an AI image by utilizing a digital TV. A generative AI execution screen associated with a user utterance can be provided without requiring the user to provide a separate additional input after executing an AI application. A user's intent can be analyzed only by a user utterance to provide a corresponding detailed screen, thereby improving user convenience in AI image generation.

According to this specification, a user can conveniently generate an image by utilizing recommended keywords provided without having to write or modify a prompt on his or her own. In addition, keywords can be determined in an input prompt by utilizing AI and highlighted along with recommended keywords associated therewith, thereby allowing core keywords to be intuitively recognized within the prompt.

According to this specification, a prompt including specific and diverse elements for generating an AI image can be generated. Various recommended keywords can be provided based on a user input prompt, thereby generate images that are similar to and richer than an image desired by a user.

According to this specification, a customized prompt according to a user preference can be provided when generating an AI image. In addition, a user can utilize his or her own generated and modified AI image as a standby screen of a display device, thereby allowing a more personalized product experience.

### BRIEF DESCRIPTION OF THE DRAWINGS

The above and other aspects, features and other advantages of the present disclosure will be more clearly understood from the following detailed description taken in conjunction with the accompanying drawings, in which:
FIG. 1 is a block diagram showing a configuration of a display device according to one embodiment of the present disclosure;
(a) of FIG. 2 is a diagram for explaining a natural language processing (NLP) server according to an embodiment of the present disclosure;
(b) of FIG. 2 is a diagram for explaining a generative AI server according to an embodiment of the present disclosure;
FIG. 3 is a diagram for explaining an AI system including a display device according to an embodiment of the present disclosure;
FIG. 4 shows an operational flow diagram between each module of a display device for providing a generative AI screen based on a user utterance and an NLP server according to the present disclosure;
FIG. 5 shows an exemplary screen of a display device for recognizing a user utterance;
FIG. 6 shows an exemplary screen of a display device for providing an AI image generation guide screen based on a user utterance;
FIG. 7 shows an exemplary screen of a display device for providing an AI image generation idea acquisition screen based on a user utterance;
FIG. 8 shows an operational flow diagram between each module of a display device for providing an AI image generation guide screen and a generation AI server according to the present disclosure;
FIG. 9 shows an exemplary screen of a display device for updating a prompt and a recommended keyword list by selecting a recommended keyword according to the present disclosure;
FIG. 10 shows an exemplary screen of a display device for displaying a random prompt and a recommended keyword list associated with a recommended word according to the present disclosure;
FIG. 11 shows an exemplary screen of a display device for generating an AI image based on a prompt and setting it as a display standby screen according to the present disclosure;
FIG. 12 shows a flow diagram of a method for providing a generative AI screen based on a user utterance performed by a display device and an AI system including the same;
FIG. 13 shows a flow diagram of a method for providing an AI image generation guide screen performed by a display device and an AI system including the same;
FIG. 14 is an operational flowchart showing a method for receiving a user utterance from a display device and providing a first or second generative AI execution screen based on a user utterance according to the present disclosure; and
FIG. 15 is an operational flowchart showing a method for analyzing a user's utterance data to provide an utterance intent analysis result in an NLP server according to the present disclosure.

### DETAILED DESCRIPTION OF THE EMBODIMENTS

It should be noted that technical terms used herein are merely used to describe a specific embodiment, but are not intended to limit the present disclosure. In addition, a singular expression used herein can include a plural expression unless clearly defined otherwise in the context. The suffixes "module" and "part" for elements used in the following description are given or used interchangeably in consideration of only the ease of writing the specification, and do not have meanings or roles that are distinguished from each other by themselves.

As used herein, terms such as "comprise" or "include" should not be construed to necessarily include all elements or steps described herein, and should be construed not to include some elements or some steps thereof, or should be construed to further include additional elements or steps.

In addition, in describing technologies disclosed herein, when it is determined that a detailed description of known technologies related thereto can unnecessarily obscure the subject matter disclosed herein, the detailed description will be omitted.

Furthermore, the accompanying drawings are provided only for a better understanding of the embodiments disclosed herein and are not intended to limit technical concepts disclosed herein, and therefore, it should be understood that the accompanying drawings include all modifications, equivalents and substitutes within the concept and technical scope of the present disclosure. In addition, not only individual embodiments described below but also a combination of the embodiments may, of course, fall within the concept and technical scope of the present disclosure, as modifications, equivalents or substitutes included in the concept and technical scope of the present disclosure.

Hereinafter, embodiments disclosed herein will be described in detail with reference to the accompanying drawings.

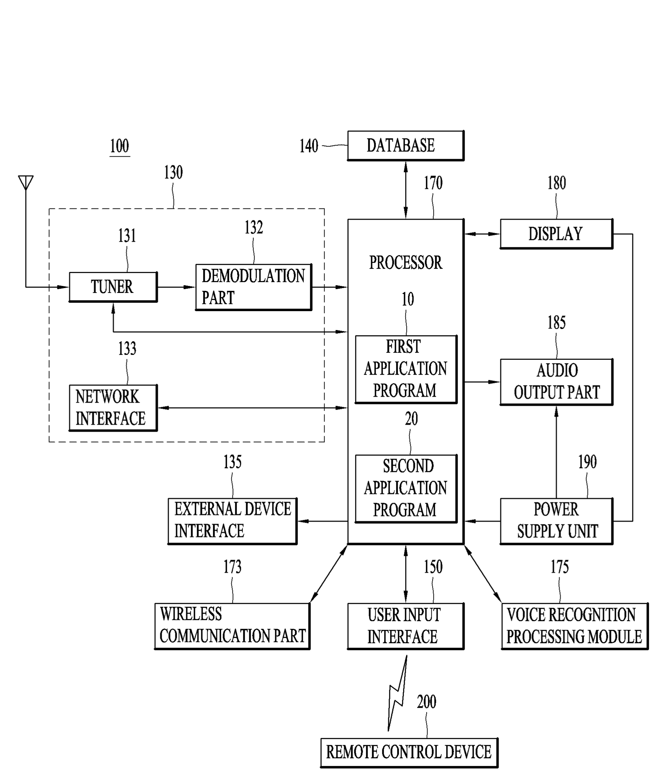

FIG. 1 is a block diagram showing a configuration of a display device according to one embodiment of the present disclosure.

Referring to FIG. 1, a display device 100 can include a broadcast receiving part 130, an external device interface 135, a database 140, a user input interface 150, a processor 170, a wireless communication part 110, a voice recognition processing module 175, a display 180, an audio output part 185, and a power supply part 190.

The broadcast receiving part 130 can include a tuner part 131, a demodulation part 132, and a network interface 133.

The tuner part 131 can select a specific broadcast channel according to a channel selection command. The tuner part 131 can receive a broadcast signal for a specific broadcast channel that has been selected.

The demodulation part 132 can separate the received broadcast signal into a video signal, an audio signal, and a data signal related to the broadcast program, and can restore the separated video signal, audio signal, and data signal into a form that can be output.

The network interface 133 can provide an interface for connecting the display device 100 to a wired/wireless network including the Internet network. The network interface 133 can transmit or receive data to or from other users or other electronic devices through the connected network or another network linked to the connected network.

The network interface 133 can access a predetermined web page through the connected network or another network linked to the connected network. That is, a predetermined web page can be accessed through a network to transmit or receive data to or from the corresponding server.

Additionally, the network interface 133 can receive content or data provided by a content provider or network operator. That is, the network interface 133 can receive content such as movies, advertisements, games, VOD, broadcast signals, and the like, and information related thereto provided from a content provider or network provider through a network.

In addition, the network interface 133 can receive firmware update information and update files provided by the network operator, and can transmit data to the Internet or content provider or network operator.

The network interface 133 can select and receive a desired application from among applications open to the public through a network.

The external device interface 135 can receive an application or a list of applications within an adjacent external device and transmit it to the processor 170 or database 140.

The external device interface 135 can provide a connection path between the display device 100 and the external device. The external device interface 135 can receive one or more images and audio output from an external device connected to the display device 100 in a wireless or wired manner, and transmit them to the processor 170. The external device interface 135 can include a plurality of external input terminals. The plurality of external input terminals can include an RGB terminal, one or more high definition multimedia interface (HDMI) terminals, and a component terminal.

An image signal from an external device input through the external device interface 135 can be displayed through the display 180. The voice signal of the external device input through the external device interface 135 can be output through the audio output part 185.

The external device that can be connected to the external device interface 135 can be any one of a set-top box, a Blu-ray player, a DVD player, a game console, a sound bar, a smartphone, a PC, a USB memory, and a home theater, but this is only an example.

In addition, some of the content data stored in the display device 100 can be transmitted to a user or electronic device selected from among other users or other electronic devices pre-registered in the display device 100.

The database 140 can store programs for each signal processing and control within the processor 170, and store signal-processed image, voice, or data signals.

In addition, the database 140 can perform a function for temporary storage of image, video, or data signals input from the external device interface 135 or the network interface 133, and can store information on a predetermined image through a channel memory function.

The database 140 can store an application or a list of applications input from the external device interface 135 or the network interface 133.

The display device 100 can play content files (video files, still image files, music files, document files, application files, etc.) stored in the database 140 to provide them to a user.

The user input interface 150 can transmit a signal input by the user to the processor 170 or transmit a signal from the processor 170 to a user. For example, the user input interface 150 can receive and process control signals such as power on/off, channel selection, and screen setting from a remote control device 200 according to various communication methods such as Bluetooth, ultra wideband (UWB), ZigBee, radio frequency (RF) communication, or infrared (IR) communication, or process control signals from the processor 170 to be transmitted to the remote control device 200.

In addition, the user input interface 150 can transmit control signals input from local keys (not shown) such as a power key, a channel key, a volume key, and a setting key to the processor 170.

An image signal processed in the processor 170 can be input to the display 180 and displayed as an image corresponding to the corresponding image signal. In addition, the image signal processed in the processor 170 can be input to an external output device through the external device interface 135.

A voice signal processed in the processor 170 can be output as audio to the audio output part 185. In addition, the voice signal processed in the processor 170 can be input to an external output device through the external device interface 135.

Besides, the processor 170 can control an overall operation within the display device 100.

In addition, the processor 170 can control the display device 100 by a user command or internal program input through the user input interface 150. The processor 170 can access a network to allow an application or list of applications desired by a user to be downloaded into the display device 100. At least one application program can be configured to execute on the processor 170 to control the display device 100. A first application program 10 can be executed to determine the utterance intent of a user utterance and provide an AI execution screen associated therewith. A second application program 20 can be executed to provide a recommended keyword list based on a user utterance.

The processor 170 can allow channel information or the like selected by a user to be output through the display 180 or audio output part 185 along with the processed image or audio signal.

In addition, the processor 170 allows an image signal or voice signal from an external device, for example, a camera or camcorder, input through the external device interface 135 to be output through the display 180 or audio output part 185 according to an external device video playback command received through the user input interface 150.

Meanwhile, the processor 170 can control the display 180 to display an image, and for example, can control the display 180 to display a broadcast image input through the tuner part 131, an external input image input through the external device interface 135, an image input through the network interface 133, or an image stored in the database 140. In this case, the image displayed on the display 180 can be a still image or a moving image, and can be a 2D image or a 3D image.

In addition, the processor 170 can control the playback of content stored in the display device 100, received broadcast content, or external input content input from the outside, and the content can be in various forms such as broadcast images, external input images, audio files, still images, connected web screens, and document files.

The wireless communication part 110 can communicate with an external device through wired or wireless communication. The wireless communication part 110 can perform short range communication with an external device. To this end, the wireless communication part 110 can support short range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, Wireless Universal Serial Bus (Wireless USB), and the like. The wireless communication part 110 can support wireless communication between the display device 100 and the wireless communication system, between the display device 100 and another display device 100, or between the display device 100 and a network where the display device 100 (or an external server) is located through wireless area networks. One example of the wireless area networks can be a wireless personal area network.

Here, the other display device 100 can be a wearable device such as a smartwatch, smart glasses, a head mounted display (HMD) or a mobile terminal such as a smart phone that can exchange data with (or interact with) the display device 100 according to the present disclosure. The wireless communication part 110 can detect (or recognize) a wearable device capable of communication around the display device 100. Furthermore, when the detected wearable device is an authenticated device to communicate with the display device 100 according to the present disclosure, the processor 170 can transmit at least a portion of data processed in the display device 100 to the wearable device through the wireless communication part 110. Therefore, a user of the wearable device can use data processed in the display device 100 through the wearable device.

The voice recognition processing module 175 can acquire audio. The voice recognition processing module 175 can include at least one microphone (not shown), and can acquire audio around the display device 100 through the microphone (not shown).

The display 180 can generate a drive signal by converting an image signal, data signal, OSD signal processed by the processor 170 or an image signal, data signal, or the like received from the external device interface 135 into R, G, B signals, respectively.

Meanwhile, since the display device 100 shown in FIG. 1 is only one embodiment of the present disclosure, some of the shown elements can be integrated, added, or omitted depending on the specifications of the display device 100 actually implemented.

That is, two or more elements can be combined into one element, or one element can be divided into two or more elements, as needed. In addition, a function performed in each block is to describe an embodiment of the present disclosure, and a detailed operation or device thereof does not limit the scope of the present disclosure.

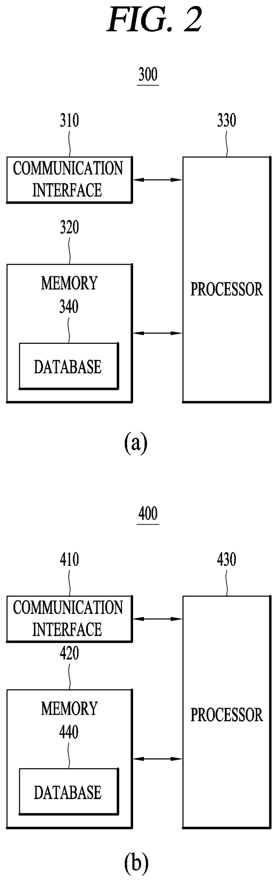

(a) of FIG. 2 is a diagram for explaining a natural language processing (NLP) server according to an embodiment of the present disclosure.

An NLP server 300 can analyze a user's utterance data using the display device 100 and provide an utterance intent analysis result.

The server 300 can include a communication interface 310, a memory 320, and a processor 330.

The server 300 can transmit and receive data through wired or wireless communication with at least one display device 100 through the communication interface 310.

The memory 320 can store a language model 340. The language model 340 can be pre-trained and stored in the memory 320. The language model 340 can be an artificial neural network-based model that performs intent analysis of utterance data. The language model 340 can understand context and perform intent analysis based on a deep neural network. For example, the language model 340 can be recurrent neural networks (RNN), transformer models, bidirectional encoder representations from transformers (ERT), generative pre-trained transformers (GPT), and the like.

The processor 330 can perform intent analysis of utterance data through morphological analysis, syntactic analysis, semantic analysis, and discourse analysis of the utterance data using the language model 340. The processor 330 can generate an utterance intent analysis result as a result of performing utterance intent analysis.

(b) of FIG. 2 is a diagram for explaining a generative AI server according to an embodiment of the present disclosure.

A generative AI server 400 can provide an AI image requested by a user who uses the display device 100. The server 400 can analyze a prompt entered by a user and provide a recommended keyword list associated therewith. The server 400 can provide AI images based on a prompt.

The server 400 can include a communication interface 410, a memory 420, and a processor 430.

The server 400 can transmit and receive data through wired or wireless communication with at least one display device 100 through the communication interface 410.

The memory 420 can be configured to include a database 440 or interact with a database 440. The database 440 can store information associated with AI image generation requested by each device. AI image generation information can be detailed information on an AI image previously requested and generated by a user. For example, it can be detailed information on an object and background included in the image, an image style, or an image quality. The database 440 can store AI image generation information in association with identification information on each device.

When receiving a recommended keyword request from the display device 100 or external device, the processor 430 can provide a recommended keyword list optimized for each device based on AI image generation information stored in the database 440. When receiving an AI image generation request from the display device 100 or external device, the processor 430 can generate an AI image based on a prompt included in the request and store the image in the database 440.

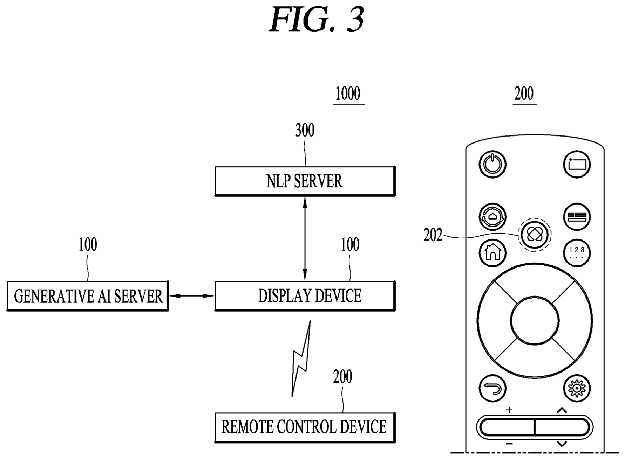

FIG. 3 is a diagram for explaining an AI system including a display device according to an embodiment of the present disclosure.

An AI system 1000 can include at least one display device 100, at least one remote control device 200, an NLP server 300, and a generative AI server 400.

The processor 170 of the display device 100 can be configured to display different generative AI screens on the display 180 based on a user utterance. The processor 170 can determine the utterance intent of the user utterance and display a generative AI screen corresponding to the utterance intent on the display 180.

In this regard, the processor 170 can receive a key input of a specific button for executing an AI application in conjunction with the user input interface 150. Subsequently, the processor 170 can receive a user utterance in conjunction with the voice recognition processing module 175.

The processor 170 can acquire an utterance intent analysis result for a user utterance in conjunction with a natural language processing (NLP) server. In this regard, the processor 170 can transmit a request for utterance intent analysis including utterance data to the NLP server 300. The request for utterance intent analysis can be a request to identify a specific intent and a named entity associated with the specific intent in a user utterance.

The communication interface 310 of the server 300 can receive a request for utterance intent analysis from the display device 100. When receiving a request for utterance intent analysis, the processor 330 of the server 300 can perform intent analysis of utterance data through morphological analysis, syntactic analysis, semantic analysis, and discourse analysis of the utterance data using the language model 340. The processor 330 can generate an utterance intent analysis result as a result of performing utterance intent analysis.

The utterance intent analysis result can include an execution item, an execution parameter, and a prompt. In this regard, the execution item can indicate an operation that is executed in association with a specific intent identified in the utterance data. The execution parameter can indicate whether a specific intent and a named entity associated with the specific intent are identified in the utterance data. The prompt can correspond to the utterance data.

The processor 330 can transmit an utterance intent analysis result to the display device 100 through the communication interface 310.

The processor 170 of the display device 100 can receive an utterance intent analysis result from the server 300 through the network interface 133. The processor 170 can trigger a first generative AI execution mode or a second generative AI execution mode based on the received utterance intent analysis result.

In this regard, the processor 170 can determine whether an intent associated with a generative AI execution and a named entity associated therewith are identified in the user utterance based on an execution item and an execution parameter included in the utterance intent analysis result. According to a result of the determination, the processor 170 can display a first generative AI execution screen of the first generative AI execution mode or a second generative AI execution screen of the second generative AI execution mode on the display. For example, the first generative AI execution screen can be an AI image generation guide screen including a prompt corresponding to a user utterance and a recommended entity keyword list associated with the identified named entity. The second generative AI execution screen can be an AI image generation idea acquisition screen including one or more recommended words for AI image generation.

Meanwhile, the processor 170 of the display device 100 can be configured to acquire a recommended entity keyword list associated with the named entity in conjunction with the generative AI server 400. In this regard, the processor 170 can transmit a recommended keyword request including the named entity to the generative AI server 400. The recommended keyword request can be a request to generate a recommended keyword list associated with the named entity. The processor 170 can further transmit device identification information of the display device 100. The device identification information can be unique identification information used to distinguish one device from another.

The communication interface 410 of the server 400 can receive a recommended keyword request and device identification information from the display device 100. Upon receiving a recommended keyword request, the processor 430 of the server 400 can acquire AI image generation information associated with the display device 100 from the database 440 based on the device identification information. The AI image generation information can be image information previously generated according to a user request. The processor 330 can generate a recommended keyword request associated with the entity name included in the recommended keyword request with reference to the AI image generation information. The recommended keyword list can include at least one of a recommended entity keyword list corresponding to the named entity, a recommended background keyword list associated with the named entity and a recommended style keyword list.

The processor 430 can transmit a recommended keyword list to the display device 100 through the communication interface 410.

The processor 170 of the display device 100 can receive the recommended keyword list from the server 400 through the network interface 133. The processor 170 can display the received recommended keyword list on the display 180.

Additionally, the processor 170 of the display device 100 can request the generative AI server 400 to generate an AI image based on a prompt. In this regard, the processor 170 can transmit an image generation request including the prompt to the generative AI server 400. The processor 170 can further transmit device identification information of the display device 100. The device identification information can be unique identification information used to distinguish one device from another.

The communication interface 410 of the server 400 can receive an image generation request and device identification information from the display device 100. Upon receiving an image generation request, the processor 430 of the server 400 can acquire AI image generation information associated with the display device 100 from the database 440 based on the device identification information. The processor 330 can generate an AI image associated with a prompt included in an image generation request with reference to the acquired information.

The processor 430 can transmit a storage location of the generated AI image to the display device 100 through the communication interface 410.

The processor 170 of the display device 100 can receive the AI image storage location from the server 400 through the network interface 133. The processor 170 can download an image by requesting a separate external database where the image is stored based on the AI image storage location. The processor 170 can display the downloaded AI image on the display 180.

The present disclosure relates to a display device for providing a generative AI screen based on a user utterance. More specifically, the present disclosure relates to an AI system including a display device and a server for providing a generative AI screen based on a user utterance.

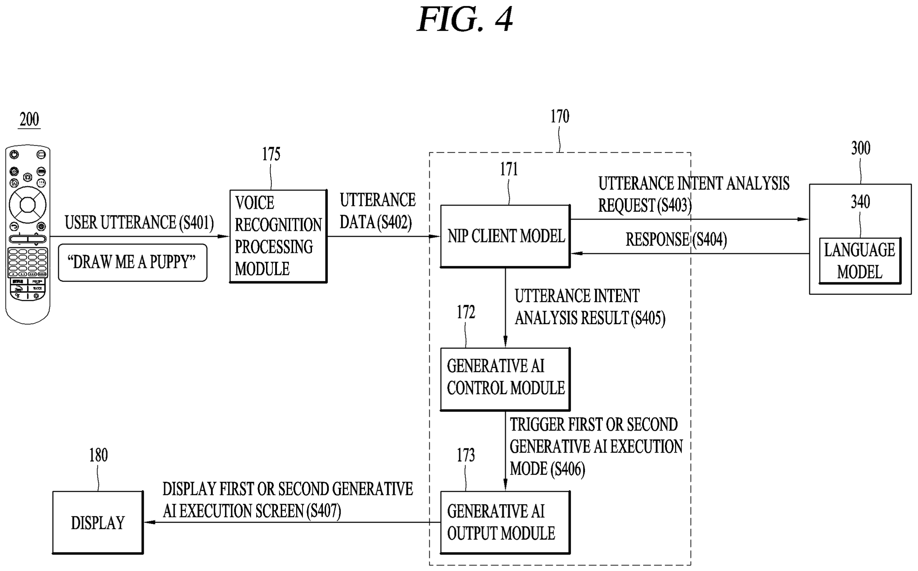

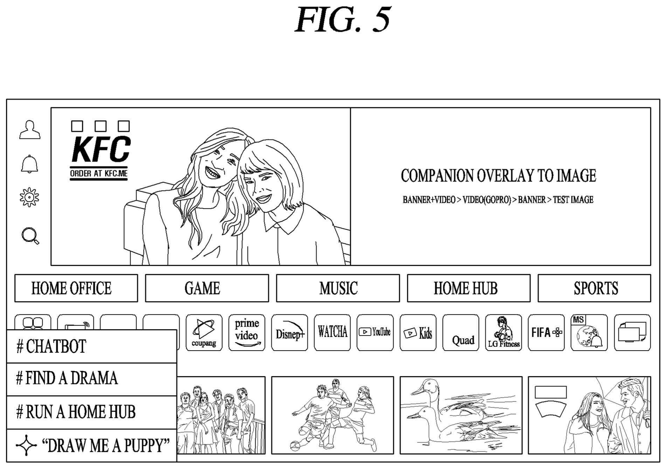

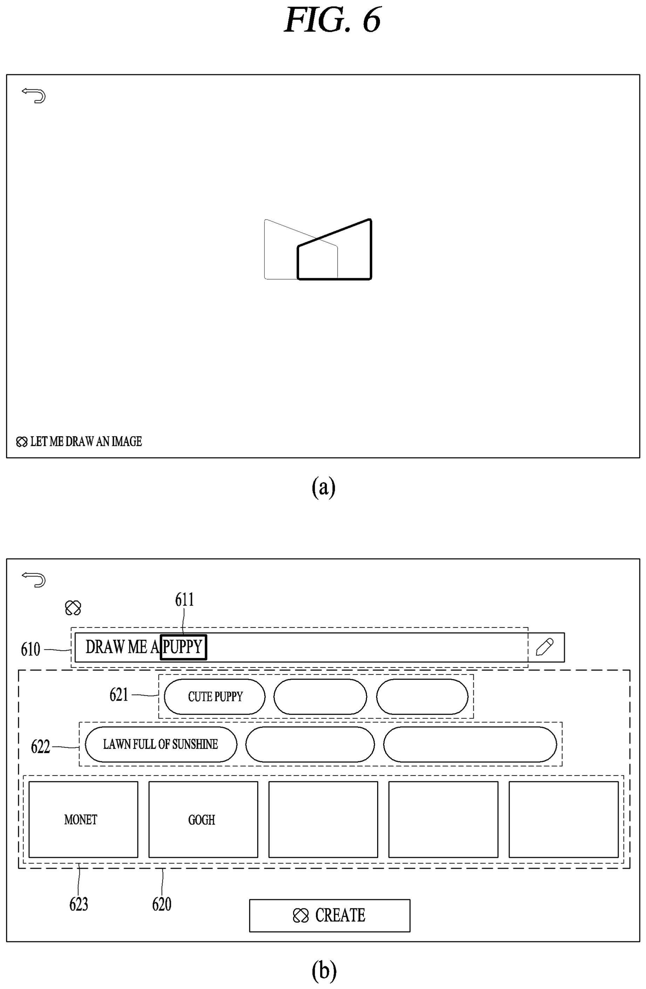

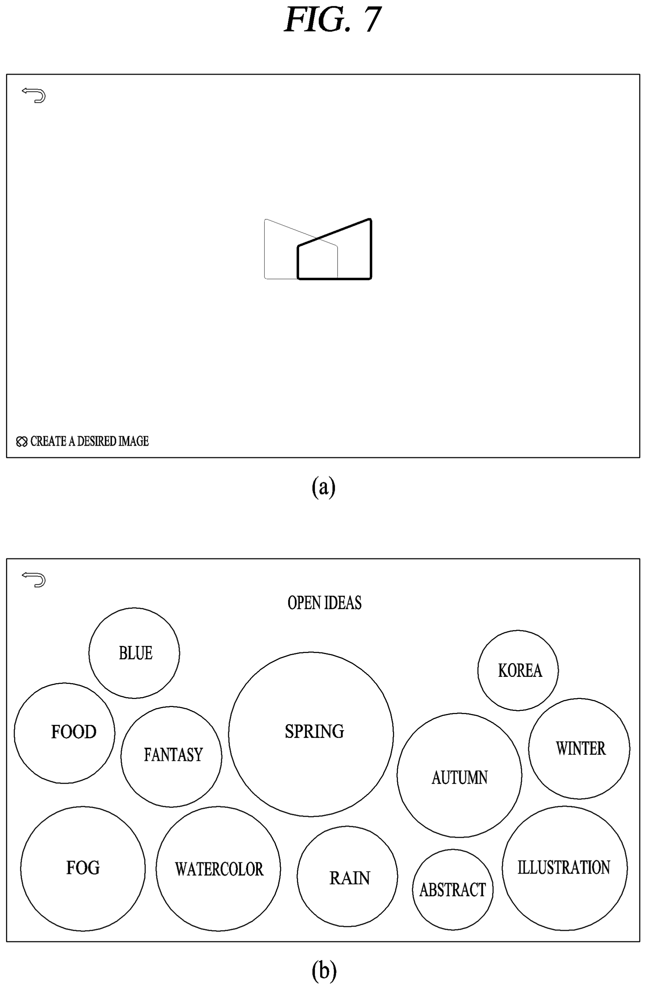

Hereinafter, a display device for providing a generative AI screen based on a user utterance according to the present disclosure and an AI system including the same will be described. In this regard, FIG. 4 shows an operational flow diagram between each module of a display device for providing a generative AI screen according to a user utterance and an NLP server according to the present disclosure. FIG. 5 shows an exemplary screen of a display device for recognizing a user utterance. FIG. 6 shows an exemplary screen of a display device for providing an AI image generation guide screen based on a user utterance. FIG. 7 shows an exemplary screen of a display device for providing an AI image generation idea acquisition screen based on a user utterance.

Referring to FIGS. 1 to 7, the display device 100 for providing a generative AI screen according to a user utterance according to the present disclosure will be described. The display device 100 can be configured to include a voice recognition processing module 175, a processor 170, and a display 180. Each component of the display device 100 can interact with the remote control device 200 and the NLP server 300.

The voice recognition processing module 175 can be configured to receive a user utterance following a key input of a specific button of the remote control device 200. In this regard, the voice recognition processing module 175 can receive a user utterance associated with a generative AI application execution.

The display 180 can be configured to display a generative AI execution screen associated with the user utterance. In this regard, the display 180 can display an AI image generation guide screen including a prompt corresponding to a user utterance and a recommended keyword list based on the prompt. The display 180 can display an AI image generation idea acquisition screen including one or more recommended words. In addition, the display 180 can display an AI image generated based on the prompt on the screen.

The processor 170 can be configured to determine the utterance intent of a user utterance. The processor 170 can be configured to display a generative AI execution screen corresponding to the utterance intent on the display 180. In this regard, the processor 170 can determine whether a specific intent associated with generative AI and a named entity associated with the specific intent are identified in the user utterance. The processor 170 can trigger a first generative AI execution mode or a second generative AI execution mode according to a result of the determination. The processor 170 can display a first generative AI execution screen of the first generative AI execution mode or a second generative AI execution screen of the second generative AI execution mode on the display 180. The processor 170 can display, when both a specific intent and a named entity associated with the specific intent are identified in the user utterance, the first generative AI execution screen on the display 180. The processor 170 can display, when only a specific intent is identified in the user utterance, the second generation AI execution screen on the display 180.

Meanwhile, the processor 170 can include a natural language processing (NLP) client module 171 configured to interact with an NLP server. The NLP client module 171 can be configured to acquire an utterance intent analysis result for the user utterance in conjunction with the NLP server. In this regard, the utterance intent analysis result can include at least one of an execution item, an execution parameter, and a prompt corresponding to the user utterance.

The execution item can indicate an operation that is executed in association with a specific intent identified in the user utterance. For example, an intent associated with generative AI can be identified from the user utterance. In this case, the execution item can be a generative AI execution. The execution parameter can indicate whether a specific intent and a named entity associated with the specific intent are identified in the user utterance. In this regard, both a specific intent and a named entity associated with the specific intent can be identified in the user utterance. Alternatively, only a specific intent can be identified, but a named entity associated with the specific intent cannot be identified in the user utterance. When both a specific intent and a named entity associated with the specific intent are identified in the user utterance, the execution parameter can be set to a first execution mode. When only a specific intent is identified in the user utterance, the execution parameter can be set to a second execution mode.

For example, a user can utter, "draw me a puppy." In the user utterance, a specific intent, "draw," and a named entity "puppy" associated with "draw," can be identified. In this case, the utterance intent of the user utterance can be an intent to "draw" an entity called a "puppy." The processor 170 can display a first generation AI execution screen for "draw" an entity called "puppy" on the display 180. In this regard, the NLP client module 171 can acquire an utterance intent analysis result for "draw me a puppy" in conjunction with the NLP server. The execution item included in the utterance intent analysis result can be a generative AI execution representing an operation executed in association with "draw." The execution parameter included in the utterance intent analysis result can indicate whether a named entity associated with a specific intent is identified together. In this case, the execution parameter can be a first execution mode, since the named entity "puppy" associated with "draw" is further identified along with the specific intent of "draw." The utterance intent analysis result can include a prompt corresponding to the user utterance, such as "draw me a puppy."

Meanwhile, the user can utter, "draw me a picture." In the user utterance, only the specific intent "draw" can be identified, and the named entity associated with "draw" cannot be identified. In this case, an utterance intent of the user utterance can be an intent to "draw." The processor 170 can display a generative AI execution screen for "draw" on the display 180. The generative AI execution screen for "draw" cannot be associated with a specific named entity. In this regard, the NLP client module 171 can acquire an utterance intent analysis result for "draw me a picture" in conjunction with the NLP server. The execution item included in the utterance intent analysis result can be a generative AI execution representing an operation executed in association with "draw." Since no named entity associated with the intent "draw" is identified in the user utterance, the execution parameter can be a second execution mode. A prompt cannot be included in the utterance intent analysis result.

Meanwhile, the processor 170 can further include a generative AI control module 172 and a generative AI output module 173. In this regard, the generative AI control module 172 can receive the utterance intent analysis result from the NLP client module 171. The generative AI control module 172 can be configured to trigger a first generative AI execution mode or a second generative AI execution mode based on the utterance intent analysis result.

The generative AI output module 173 can be configured to display, in response to a trigger for the first or second generative AI execution mode, a generative AI execution screen corresponding to each mode on the display 180. The generative AI output module 173 can display, in response to a trigger for the first generative AI execution mode, a first generative AI execution screen on the display 180. The generative AI output module 173 can display, in response to a trigger for the second generative AI execution mode, a second generative AI execution screen on the display 180.

In this regard, the generative AI control module 172 can trigger the first generative AI execution mode or the second generative AI execution mode based on the execution item and execution parameter included in the utterance intent analysis result. When the execution item is a generative AI execution and the execution parameter is a first execution mode, the generative AI control module 172 can determine that both an intent and a named entity associated with the generative AI execution are identified in the user utterance. The generative AI control module 172 can determine that an utterance intent of the user utterance is a generative AI execution related to a named entity. The generative AI control module 172 can trigger the first generative AI execution mode according to a result of the determination.

Meanwhile, when the execution item is a generative AI execution and the execution parameter is a second execution mode, the generative AI control module 172 can determine that only an intent associated with the generative AI execution is identified in the user utterance. The generative AI control module 172 can determine that an utterance intent of the user utterance is a generative AI execution. The generative AI control module 172 can determine that an utterance intent of the user utterance is a generative AI execution. The generative AI control module 172 can trigger the second generative AI execution mode according to a result of the determination.

A user utterance can be input (S401) following a key input of a specific button of the remote control device 200. In this regard, a specific button on the remote control device 200 can correspond to the AI shortcut key 202 of FIG. 3. When an input exceeding a threshold time period is applied to a specific button of the remote control device 200, the user can utter a voice for a generative AI execution. For example, a user utterance can be "draw me a puppy."

The voice recognition processing module 175 can be configured to perform a voice recognition trigger operation to allow voice recognition of the user through the remote control device 200, and acquire utterance data, which is the user's voice, according to the trigger operation. When an input exceeding a threshold time period is applied to a specific button of the remote control device 200, the voice recognition processing module 175 can acquire a voice "draw me a puppy." The processor 170 can display a sentence corresponding to the user utterance in one area of the display 180 in conjunction with the voice recognition processing module 175. As shown in FIG. 5, the sentence "draw me a puppy" can be displayed in one area of the display 180.

The NLP client module 171 can receive utterance data corresponding to a user utterance from the voice recognition processing module 175 (S402). The NLP client module 171 can transmit a request for utterance intent analysis including utterance data to the NLP server 300 (S403). The request can be a request to analyze the utterance intent of the user utterance. The request can be a request to identify a specific intent and a named entity associated with the specific intent in the user utterance.

In response to transmitting a request for utterance intent analysis, the NLP client module 171 can acquire a response including an utterance intent analysis result from the NLP server 300 (S404). The utterance intent analysis result can include at least one of an execution item, an execution parameter, and a prompt. The execution item can indicate an operation that is executed in association with a specific intent identified in the user utterance. The execution parameter can indicate whether a specific intent and a named entity associated with the specific intent are identified in the user utterance. The prompt can respond to the user utterance. The NLP client module 171 can transmit an utterance intent analysis result to the generative AI control module 172 (S405).

The generative AI control module 172 can receive the utterance intent analysis result from the NLP client module 171. The generative AI control module 172 can trigger a first generative AI execution mode or a second generative AI execution mode based on the utterance intent analysis result (S406). The generative AI control module 172 can trigger the first generative AI execution mode or the second generative AI execution mode based on the execution item and execution parameter included in the utterance intent analysis result.

In this regard, when the execution item is a generative AI execution and the execution parameter is a first execution mode, the generative AI control module 172 can determine that both the intent associated with the generative AI execution and the named entity associated therewith are identified in the user utterance. Accordingly, the generative AI control module 172 can trigger the first generative AI execution mode.

On the contrary, when the execution item is a generative AI execution and the execution parameter is a second execution mode, the generative AI control module 172 can determine that only the intent associated with the generative AI execution is identified in the user utterance. Accordingly, the generative AI control module 172 can trigger the second generative AI execution mode.

The generative AI output module 173 can display, in response to a trigger for the first generative AI execution mode or the second generative AI execution mode, a generative AI execution screen corresponding to each mode on the display 180 (S407).

In this regard, the generative AI output module 173 can display, in response to a trigger for the first generative AI execution mode, a first generative AI execution screen on the display 180. The first generative AI execution screen can be an AI execution screen related to both the intent and named entity associated with the generative AI execution. For example, the first generation AI execution screen can be an AI image generation guide screen shown in (b) of FIG. 6. The first generative AI execution screen in (b) of FIG. 6 can be an AI execution screen related to both a specific intent, "draw me," and a named entity, "puppy.". The first generative AI execution screen can include a prompt 610 corresponding to a user utterance and a recommended keyword list 620 associated with the named entity.

In (b) of FIG. 6, an input window including the prompt 610 can be displayed in a first area of the display 180. The prompt 610 displayed in the first area can highlight a keyword 611 corresponding to the named entity. In "draw me a puppy" 610, a "puppy" 611 can be highlighted. In this regard, highlighting a keyword can refer to displaying a specific keyword in an intensified manner within a prompt to distinguish it from other keywords. The processor 170 can highlight one or more keywords by utilizing visual elements such as text color, text font, text thickness, background color, or underline.

In (b) of FIG. 6, a recommended keyword list 620 can be displayed in a second area of the display 180. The recommended keyword list 620 can include at least one of a recommended entity keyword list 621 corresponding to the named entity, a recommended background keyword list 622 associated with the named entity, and a recommended style keyword list 623. In this regard, the recommended entity keyword list 621 can include one or more recommended entity keywords that can be replaced in response to the named entity 611. Substitutes for a "puppy" include a "cute puppy," a "Jindo dog puppy," and a "golden retriever puppy." The recommended background keyword list 622 can include recommended background keywords associated with a "puppy," such as a "lawn full of sunshine," a "cozy living room," and "blue sky and clouds." The recommended style keyword list 623 can include image styles associated with a "puppy," such as "Monet," "Gogh," "Renoir," "photography," "watercolor," and the like.

Additionally, the generative AI output module 173 can display, in response to a trigger for the second generative AI execution mode, a second generative AI execution screen on the display 180. The second generative AI execution screen can be an AI execution screen related to an intent associated with the generative AI execution. The second generative AI execution screen cannot be associated with a specific named entity.

For example, the second generation AI execution screen can be an AI image generation idea acquisition screen shown in (b) of FIG. 7. The second generation AI execution screen in (b) of FIG. 7 can be an AI execution screen related to a specific intent, "draw." The second generative AI execution screen can include one or more random recommended words.

Meanwhile, the generative AI output module 173 can display a screen indicating that an operation corresponding to an utterance intent is being performed prior to displaying the first or second generative AI execution screen on the display 180. For example, when a user utters "draw me a puppy," the generative AI output module 173 can display a screen indicating that an operation corresponding to "draw me a puppy" is being performed on the display 180. As shown in (a) of FIG. 6, the sentence "I will draw an image." can be displayed in one area of the display 180. As another example, when a user utters "draw me a picture," the generative AI output module 173 can display a screen indicating that an operation corresponding to "draw me a picture" is being performed on the display 180. As shown in (a) of FIG. 7, the sentence "create a desired image" can be displayed in one area of the display 180.

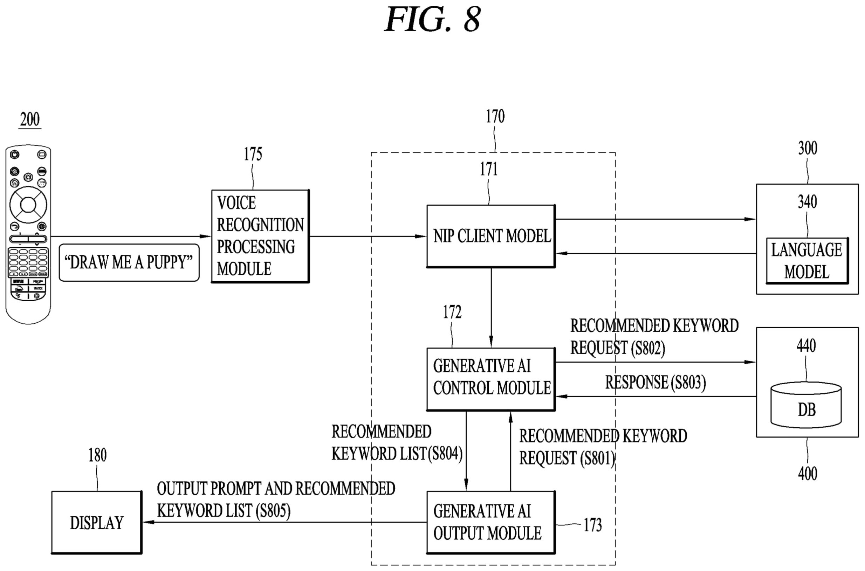

Meanwhile, a display device according to the present disclosure can be configured to provide an AI image generation guide screen that displays a prompt corresponding to a user utterance and a recommended keyword list associated therewith. In this regard, FIG. 8 shows an operational flow diagram between each module of a display device for providing an AI image generation guide screen and a generation AI server according to the present disclosure.

Referring to FIGS. 1 to 8, the display device 100 for providing an AI image generation guide screen according to the present disclosure will be described. In this regard, each component of the display device 100 can interact with the remote control device 200 and the generative AI server 400.

In FIG. 8, the voice recognition processing module 175 can acquire a user utterance "draw me a puppy" input into the remote control device 200. The voice recognition processing module 175 can transmit utterance data corresponding to the user utterance to the NLP client module 171. The NLP client module 171 can request the NLP server 300 to analyze an utterance intent for "draw me a puppy," and acquire a response including an utterance intent analysis result from the server 300.

An execution item included in the utterance intent analysis result can be a generative AI execution associated with "draw me." Since both "draw me" and a named entity "puppy" associated with "draw me" are identified in the user utterance, the execution item included in the utterance intent analysis result can be a first execution mode. The generative AI control module 172 can trigger a first generative AI execution mode based on the utterance intent analysis result. The generative AI control module 172 can trigger the first generative AI execution mode by determining that both a specific intent associated with a generative AI execution and a named entity associated therewith are identified in the user utterance. The generative AI output module 173 can display, in response to a trigger for the first generative AI execution mode, a first generative AI execution screen on the display 180. The first generative AI execution screen can be an AI image generation guide screen including a prompt corresponding to a user utterance and a recommended entity keyword list associated with the identified named entity.

Meanwhile, the generative AI output module 173 can request the generative AI control module 172 to acquire a recommended keyword list associated with the named entity prior to displaying the AI image generation guide screen on the display 180. In this regard, the generative AI control module 172 can be configured to acquire a recommended keyword list associated with the named entity in conjunction with the generative AI server. The generative AI output module 173 can transmit a recommended keyword request including the named entity to the generative AI control module 172 (S801).

The generative AI control module 172 can transmit the received recommended keyword request to the generative AI server 400 (S802) to generate a recommended keyword list associated with the named entity. In response to the request, the generative AI control module 172 can receive a response including a recommended keyword list from the server 400 (S803). The recommended keyword list can be associated with the named entity. The recommended keyword list can include at least one of a recommended entity keyword list corresponding to the named entity, a recommended background keyword list associated with the named entity, and a recommended style keyword list associated with the named entity.

The generative AI control module 172 can transmit the recommended keyword list to the generative AI output module 173 (S804). The AI output module 173 can display a recommended keyword list and a prompt corresponding to the user utterance on the display 180 (S805). For example, the AI output module 173 can display the AI image generation guide screen in (b) of FIG. 6 on the display 180. The AI image generation guide screen can include a prompt corresponding to a user utterance and a recommended keyword list.

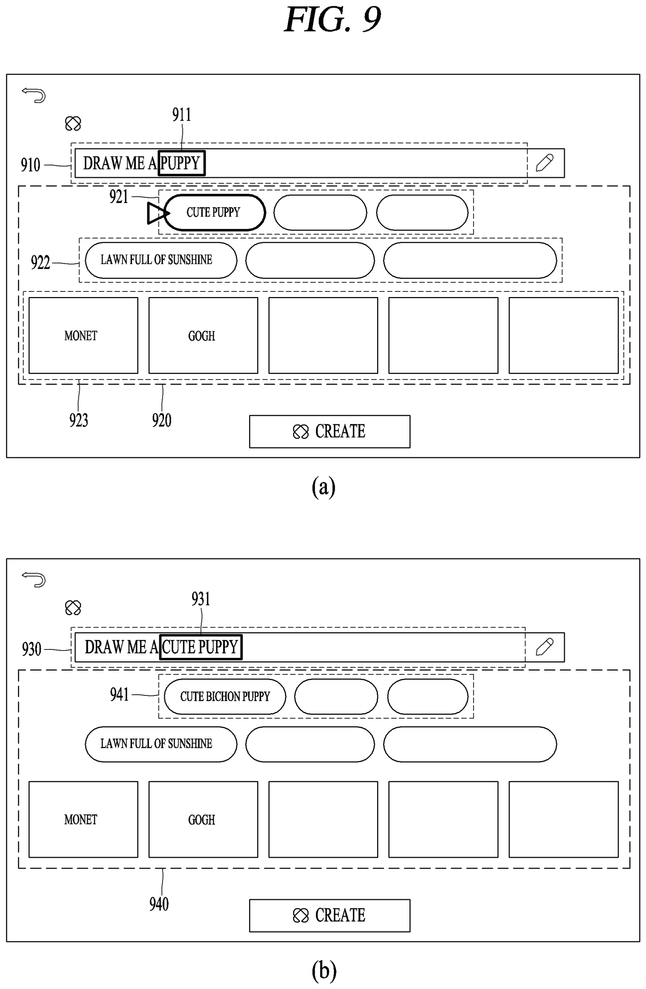

Meanwhile, a display device according to the present disclosure can be configured to select one keyword from the recommended keyword list on the AI image generation guide screen. A display device according to the present disclosure can update, when one recommended keyword is selected from the recommended keyword list, the prompt and the recommended keyword list based on the selected recommended keyword. In this regard, FIG. 9 shows an exemplary screen of a display device for updating a prompt and a recommended keyword list by selecting a recommended keyword according to the present disclosure.

Hereinafter, referring to FIGS. 1 to 9, the display device 100 of updating a prompt and a recommended keyword list by selecting one keyword from the recommended keyword list according to the present disclosure will be described.

As shown in (a) of FIG. 9, the display device 100 can display a prompt 910 corresponding to a user utterance and a recommended keyword list 920 associated with a named entity in the prompt on the display 180. In this regard, the recommended keyword list 920 can include at least one of a recommended entity keyword list 921, a recommended background keyword list 922, and a recommended style keyword 923. The recommended entity keyword list 921 can include one or more recommended keywords that can be replaced in response to the named entity. The recommended background keyword list 922 and recommended style keyword 923 can each include one or more recommended background keywords or recommended style keywords associated with the named entity.

The user can select one recommended entity keyword from the recommended entity keyword list 921. In (a) of FIG. 9, a "cute puppy" can be selected. The generative AI output module 173 can update the prompt when one recommended keyword is selected from the recommended entity keyword list. A keyword corresponding to the recommended entity keyword selected in the prompt can be updated by being replaced with the selected keyword. As shown in (b) of FIG. 9, a "puppy" can be replaced with a "cute puppy" 931. The prompt can be updated from "draw me a puppy" to "draw me a cute puppy" 930. The updated prompt 930 can be displayed on the display 180.

Additionally, the user can select one keyword from the recommended background keyword list. For example, in (a) of FIG. 9, a "lawn full of sunshine" can be selected from the recommended background keyword list 922. The generative AI output module 173 can update, when one recommended keyword is selected from the recommended background keyword list or the recommended style keyword list, the prompt to further include the selected recommended keyword. "Draw me a puppy" can be updated to "Draw me a puppy on a lawn full of sunshine." As another example, in (a) of FIG. 9, "Gogh" can be selected from the recommended style keyword list. "Draw me a puppy" can be updated to "Draw me a puppy, Gogh style."

Meanwhile, the display device 100 according to the present disclosure can be configured to update, when one keyword is selected from the recommended keyword list, not only the prompt but also the recommended keyword list. For example, when a "cute puppy" is selected in (a) of FIG. 9, the generative AI output module 173 can acquire a recommended keyword list associated with the selected recommended keyword.

In this regard, the generative AI output module 173 can transmit a recommended keyword request including the selected recommended keyword to the generative AI control module 172. The generative AI control module 172 can acquire a new recommended keyword list associated with the selected recommended keyword in conjunction with the generative AI server 400. The new recommended keyword list can include at least one of a recommended entity keyword list corresponding to the selected recommended keyword, a recommended background keyword list associated with the selected recommended keyword, and a recommended style keyword list. The generative AI output module 173 can display a new recommended keyword list along with the updated prompt on the display 180.

For example, as shown in (b) of FIG. 9, a new recommended keyword list 940 associated with the selected recommended keyword can be displayed on the display 180. The new recommended keyword list can include a recommended entity keyword list 941 including a new recommended entity keyword such as a "cute bichon puppy."

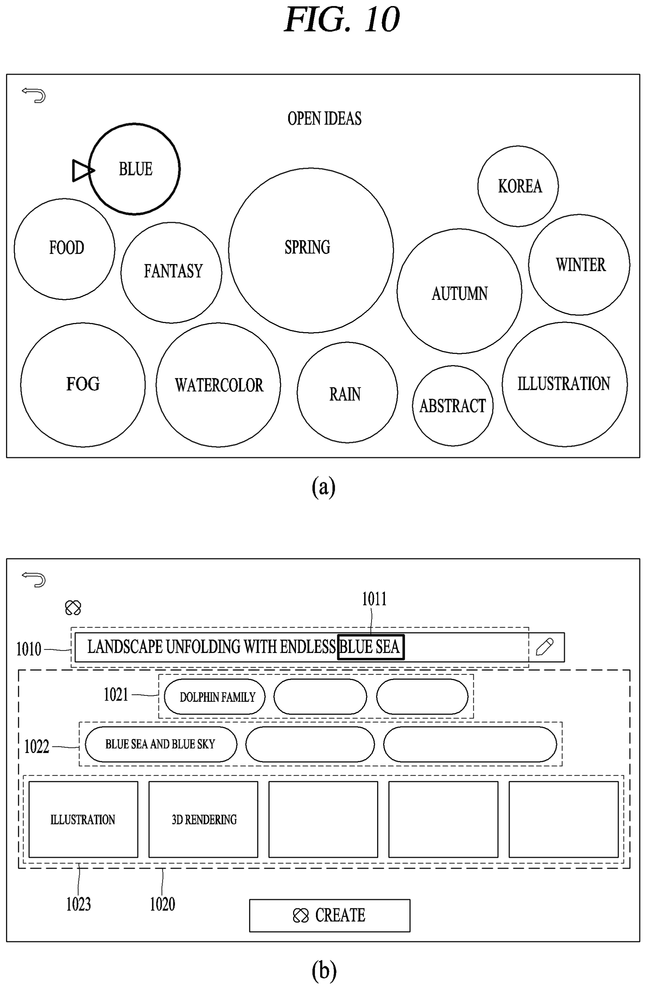

Meanwhile, a display device according to the present disclosure can be configured to select one of the recommended words on an AI image generation idea acquisition screen. A display device according to the present disclosure can generate, when one word is selected from among the recommended words, a random prompt associated with the selected word. In this regard, FIG. 10 shows an exemplary screen of a display device for displaying a random prompt and a recommended keyword list associated with a recommended word according to the present disclosure.

Hereinafter, referring to FIGS. 1 to 10, the display device 100 for displaying a random prompt and a recommended keyword list associated with a recommended word according to the present disclosure will be described.

When one word is selected from among recommended words, the generative AI output module 173 can generate a random prompt associated with the selected word. The generative AI output module 173 can request the generative AI control module 172 to acquire a recommended keyword list based on the random prompt. The generative AI output module 173 can transmit a recommended keyword request including the random prompt to the generative AI control module 172.

In this regard, the generative AI control module 172 can be configured to acquire at least one or more highlight keywords and recommended keyword lists based on the random prompt in conjunction with the generative AI server. The generative AI control module 172 can transmit the received recommended keyword request to the generative AI server 400. The request can be a request to determine at least one or more highlight keywords in the random prompt and generate recommended keyword lists associated with the determined highlight keywords. In response to the request, the generative AI control module 172 can receive at least one or more highlight keywords and recommended keyword lists based on a random prompt from the generative AI server 400.

The one or more highlight keywords can include at least one of a first keyword associated with an object included in the random prompt, a second keyword associated with a background, and a third keyword associated with an image style. The recommended keyword list can include at least one of a recommended object keyword list, a recommended background keyword list, and a recommended style keyword list associated with at least one of the first keyword, the second keyword, and the third keyword.

The generative AI control module 172 can transmit one or more highlight keywords and recommended keyword lists acquired from the server 400 to the generative AI output module 173. The generative AI output module 173 can receive one or more highlight keywords and recommended keyword lists from the generative AI control module 172. The generative AI output module 173 can highlight parts associated with highlight keywords in the random prompt and recommended keyword list to display them on the display 180.

Keywords corresponding to the highlight keywords can be highlighted in the random prompt displayed on the display 180. When the highlight keywords include a first keyword and a second keyword, respective keywords corresponding to the first keyword and the second keyword in the random prompt can be highlighted in different colors. In the random prompt, respective keywords corresponding to the first keyword and the second keyword can be highlighted in the first and second colors. In the recommended keyword list displayed on the display 180, each list can be highlighted in the same color as that of the keyword associated therewith in the random prompt. For example, the recommended object keyword list can be associated with the first keyword, and the recommended background keyword list can be associated with the second keyword. In this case, the recommended object keyword list and recommended background keyword list displayed on the display 180 can be displayed in the first and second colors, respectively.

On the AI image generation idea acquisition screen in (a) of FIG. 10, the recommended word "blue" can be selected. In response thereto, the generative AI output module 173 can generate a random prompt associated with "blue." The random prompt can be "a landscape unfolding with endless blue sea." The generative AI output module 173 can determine one or more highlight keywords from the "landscape unfolding with endless blue sea" and request the generative AI control module 172 to generate a recommended keyword list associated therewith. In response to the request, the generative AI control module 172 can receive one or more highlight keywords and recommended keyword lists based on a "landscape unfolding with endless blue sea" from the generative AI server 400. The generative AI output module 173 can highlight parts associated with highlight keywords in the random prompt and recommended keyword list to display them on the display 180.

For example, the highlight keyword can be "blue sea", which is associated with an object included in the random prompt. As shown in (b) of FIG. 10, "blue sea" 1011 within a prompt 1010 can be highlighted. The recommended keyword list 1020 can include a recommended object keyword list 1021, a recommended background keyword list 1022, or a recommended style keyword list 1023 associated with "blue sea." The recommended object keyword list 1021 can include one or more recommended object keywords, such as a "dolphin family" associated with "blue sea". The recommended background keyword list 1022 can include one or more recommended background keywords, such as "blue sea and blue sky" associated with "blue sea". The recommended style keyword list 1023 can include one or more recommended style keywords such as "illustration" and "3D rendering" associated with "blue sea". The recommended object keyword list 1021, the recommended background keyword list 1022, and the recommended style keyword list 1023 can be displayed in the same color as that of the "blue sea" 1011 in the prompt 1010.

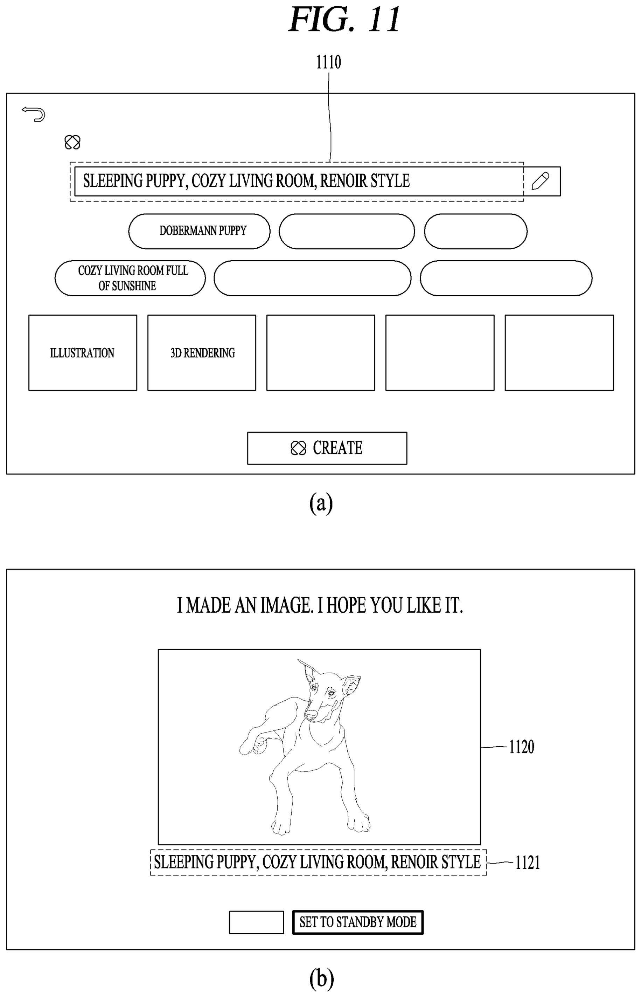

Meanwhile, a display device according to the present disclosure can be configured to generate an AI image based on an input prompt and set the generated AI image as a standby screen of the display. In this regard, FIG. 11 shows an exemplary screen of a display device for generating an AI image based on a prompt and setting it as a display standby screen according to the present disclosure.

Referring to FIGS. 1 to 11, the display device 100 for generating an AI image based on an input prompt and setting the generated image as a standby screen according to the present disclosure will be described. In this regard, each component of the display device 100 can interact with the remote control device 200 and the generative AI server 400.

The generative AI control module 172 can receive a key input or voice input into the remote control device 200 associated with an image generation request. For example, a key value corresponding to a "create" button in (a) of FIG. 11 can be entered. The generative AI control module 172 can generate an image generation request including a prompt 1110 currently displayed on the display 180. The generative AI control module 172 can transmit an image generation request to the generative AI server 400. The request can be a request to generate an AI image based on the input prompt 1110. For example, in (a) of FIG. 11 it can be a request to generate an AI image including "sleeping puppy, cozy living room, Renoir style" 1110.

In response to transmitting an image generation request to the server 400, the generative AI control module 172 can receive a response including a storage location for the generated AI image from the server 400. In this regard, the image storage location can be index-based. For example, the image storage location can include an image identifier, an address of a separate external database where the image is stored, and an image storage path. The generative AI control module 172 can access the database based on the AI image storage location. The generative AI control module 172 can request an image from the database. The generative AI control module 172 can download an image from the database.

The generative AI control module 172 can transmit the downloaded AI image to the generative AI output module 173. The generative AI output module 173 can display the received AI image 1120 on the display 180 as shown in (b) of FIG. 11. A prompt 1121 corresponding to the generated AI image 1120 can be displayed along with the AI image 1120.

Meanwhile, the generative AI output module 171 can transmit an AI image generation request including the prompt 1110 to the server, and display a notification sentence on the display 180 while waiting for a response thereto. The notification sentence can be a sentence notifying that AI is creating an image. For example, the sentence "AI is creating an image" can be displayed on the display 180. Along with the notification sentence, AI image information being generated can be further displayed on the display 180.

While the AI image is displayed on the display 180, a key input or voice input into the remote control device 200 associated with a request to set a standby mode can be received. For example, a key value corresponding to a "set to standby mode" button in (b) of FIG. 11 can be entered. In response thereto, the generative AI control module 173 can set the AI image currently displayed on the display 180 as a standby screen of the display 180 so as to be displayed on the screen. A prompt corresponding to the AI image, "sleeping puppy, cozy living room, Renoir style" can be displayed on the standby mode screen along with the AI image 1120. Image generation information, such as an AI image generation date, can be displayed together with the AI image 1120.

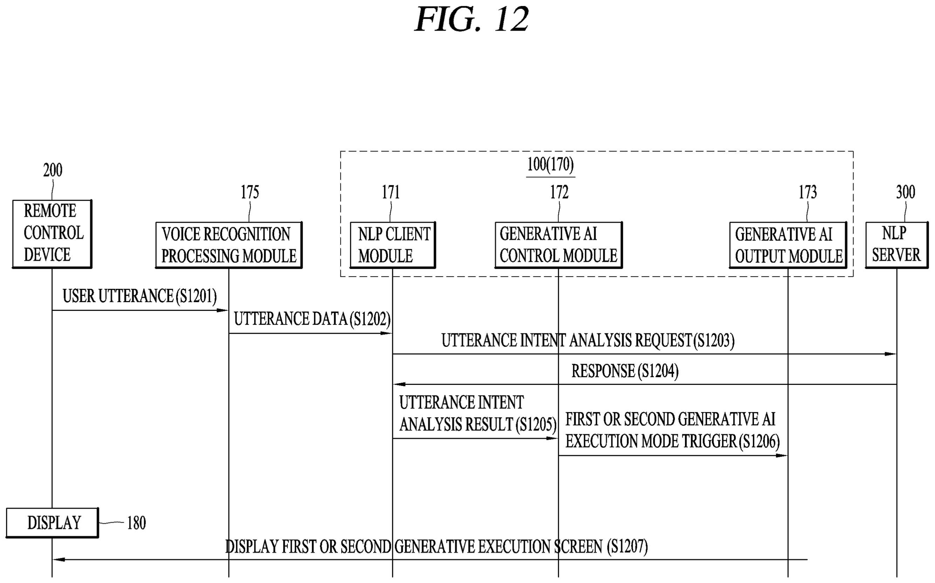

Hereinafter, a method for providing a generative AI screen according to a user utterance performed by a display device and an AI screen system including the same according to the present disclosure will be described. In this regard, FIG. 12 shows a flow diagram of a method for providing a generative AI screen based on a user utterance performed by a display device and an AI system including the same. Referring to FIGS. 1 to 12, a method for providing a generative AI screen according to a user utterance can be performed by the processor 170 of the display device 100.

A user utterance can be input following a key input of a specific button (e.g., an AI short key 202 of FIG. 3) of the remote control device 200 (S1201). The voice recognition processing module 175 can be configured to perform a voice recognition trigger operation to allow voice recognition of the user through the remote control device 200, and acquire utterance data, which is the user's voice, according to the trigger operation.

The NLP client module 171 can receive utterance data corresponding to a user utterance from the voice recognition processing module 175 (S1202). The NLP client module 171 can transmit a request for utterance intent analysis including utterance data to the NLP server 300 (S1203). The request can be a request to analyze the utterance intent of the user utterance. The request can be a request to identify a specific intent and a named entity associated with the specific intent in the user utterance.

In response to transmitting a request for utterance intent analysis, the NLP client module 171 can acquire a response including an utterance intent analysis result from the NLP server 300 (S1204). The utterance intent analysis result can include at least one of an execution item, an execution parameter, and a prompt. The execution item can indicate an operation that is executed in association with a specific intent identified in the user utterance. The execution parameter can indicate whether a specific intent and a named entity associated with the specific intent are identified in the user utterance. The prompt can respond to the user utterance. The NLP client module 171 can transmit an utterance intent analysis result to the generative AI control module 172 (S1205).

The generative AI control module 172 can receive the utterance intent analysis result from the NLP client module 171. The generative AI control module 172 can trigger a first generative AI execution mode or a second generative AI execution mode based on the received utterance intent analysis result (S1206). The generative AI control module 172 can trigger the first generative AI execution mode or the second generative AI execution mode based on the execution item and execution parameter included in the utterance intent analysis result.

In this regard, when the execution item is a generative AI execution and the execution parameter is a first execution mode, the generative AI control module 172 can determine that both the intent associated with the generative AI execution and the named entity associated therewith are identified in the user utterance. Accordingly, the generative AI control module 172 can trigger the first generative AI execution mode.

On the contrary, when the execution item is a generative AI execution and the execution parameter is a second execution mode, the generative AI control module 172 can determine that only the intent associated with the generative AI execution is identified in the user utterance. Accordingly, the generative AI control module 172 can trigger the second generative AI execution mode.

The generative AI output module 173 can display, in response to a trigger for the first generative AI execution mode or the second generative AI execution mode, a generative AI execution screen corresponding to each mode on the display (S1207). The generative AI output module 173 can display, in response to a trigger for the first generative AI execution mode, a first generative AI execution screen on the display. The first generative AI execution screen can be an AI execution screen related to both the intent and named entity associated with the generative AI execution.

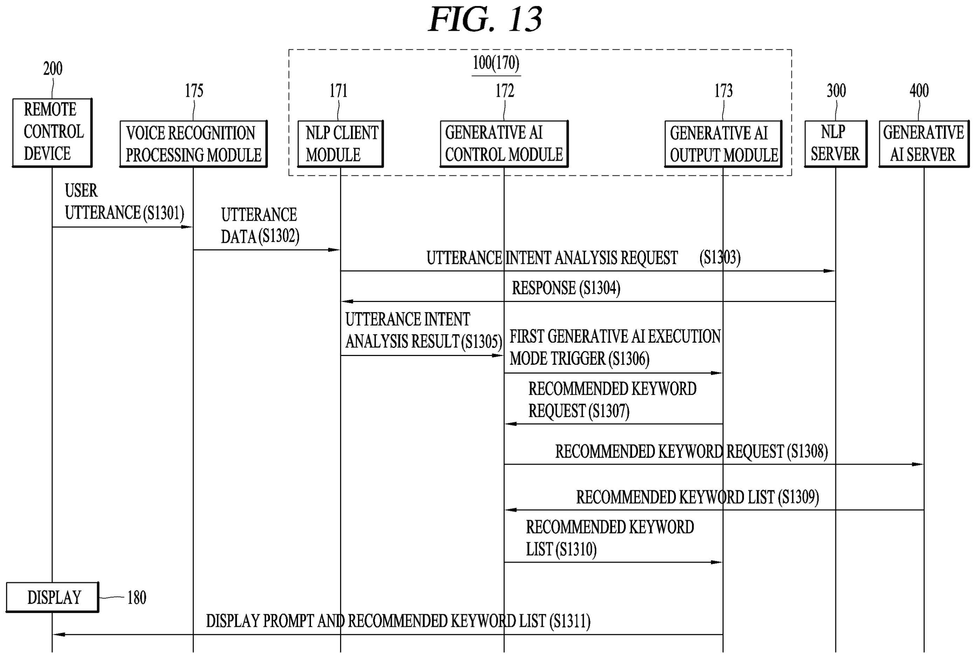

Hereinafter, a method for providing an AI image generation guide screen performed by a display device and an AI system including the same according to the present disclosure will be described. In this regard, FIG. 13 shows a flow diagram of a method for providing an AI image generation guide screen performed by a display device and an AI system including the same. Referring to FIGS. 1 to 13, a method for providing an AI image generation guide screen can be performed by the processor 170 of the display device 100.

When an input exceeding a threshold time period is applied to a specific button of the remote control device 200, the voice recognition processing module 175 can acquire a user utterance (S1301). The NLP client module 171 can receive utterance data corresponding to a user utterance from the voice recognition processing module 175 (S1302). The NLP client module 171 can request the NLP server 300 to analyze an utterance intent for the user utterance (S1303). In response thereto, the NLP client module 171 can acquire a response including an utterance intent analysis result (S1304). The utterance intent analysis result can include at least one of an execution item, an execution parameter, and a prompt. The execution item can indicate an operation that is executed in association with a specific intent identified in the user utterance. The execution parameter can indicate whether a specific intent and a named entity associated with the specific intent are identified in the user utterance. The prompt can respond to the user utterance. The NLP client module 171 can transmit an utterance intent analysis result to the generative AI control module 172 (S1305).

The generative AI control module 172 can determine a trigger for the first generative AI execution mode or the second generative AI execution mode based on the received utterance intent analysis result. In this regard, when the execution item is a generative AI execution and the execution parameter is a first execution mode, the generative AI control module 172 can determine that both the intent associated with the generative AI execution and the named entity associated therewith are identified in the user utterance. Accordingly, the generative AI control module 172 can trigger the first generative AI execution mode (S1306). The generative AI output module 173 can display, in response to a trigger for the first generative AI execution mode, a first generative AI execution screen on the display. The first generative AI execution screen can be an AI execution screen related to both the intent and named entity associated with the generative AI execution.

Meanwhile, the generative AI output module 173 can acquire a recommended keyword list associated with the named entity prior to displaying the first generative AI execution screen on the display in response to a trigger for the first generative AI execution mode. In response thereto, the generative AI output module 173 can transmit a recommended keyword request including the named entity to the generative AI control module 172 (S1307). The generative AI control module 172 can transmit the recommended keyword request to the generative AI server 400 (S1308). In response to the transmission, the generative AI control module 172 can receive a response including a recommended keyword list from the server 400 (S1309). The recommended keyword list can be associated with the named entity. The recommended keyword list can include at least one of a recommended entity keyword list corresponding to the named entity, a recommended background keyword list associated with the named entity, and a recommended style keyword list.

The generative AI control module 172 can transmit the recommended keyword list to the generative AI output module 173 (S1310). The AI output module 173 can display a recommended keyword list and a prompt corresponding to the user utterance on the display 180 (S1311).

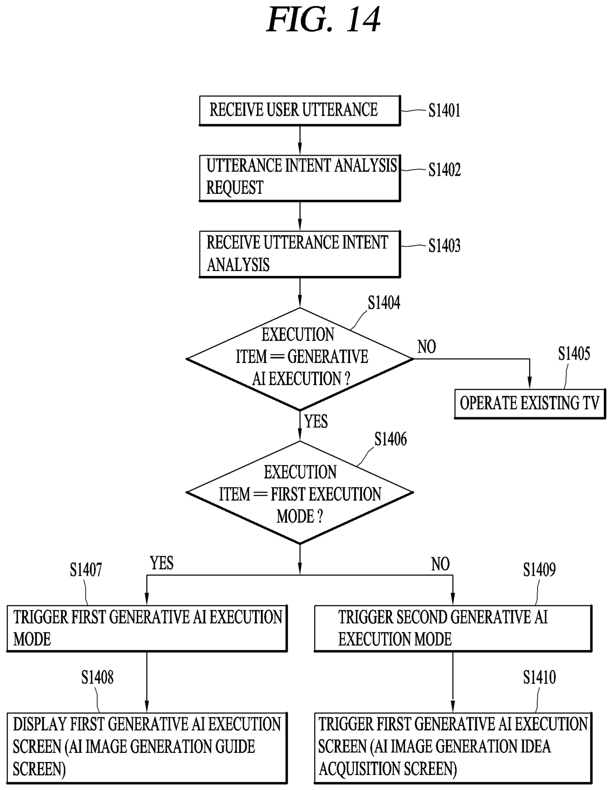

Hereinafter, a method for receiving a user utterance from a display device and providing a first or second generative AI execution screen based on a user utterance according to the present disclosure will be described. In this regard, FIG. 14 is an operational flowchart showing a method for receiving a user utterance from a display device and providing a first or second generative AI execution screen based on a user utterance according to the present disclosure. Referring to FIGS. 1 to 14, a method for receiving a user utterance and providing a first or second generation AI execution screen according to the user utterance can be performed by the processor 170 of the display device 100.

The processor 170 of the display device 100 can receive a user utterance (S1401). The processor 170 can request the NLP server 300 to analyze an utterance intent for the user utterance (S1402). The processor 170 can analyze whether a specific intent and a named entity associated therewith are identified in the user utterance, and request to provide an analysis result.

In response to the request, the processor 170 can receive an utterance intent analysis result from the NLP server 300 (S1403). The utterance intent analysis result can include at least one of an execution item representing an execution to be executed in association with a specific intent, an execution parameter representing whether a named entity associated with the specific intent is identified, and a prompt corresponding to the user utterance.

The processor 170 can determine whether the execution item is a generative AI execution (S1404). As a result of the determination, when the execution item is not a generative AI execution, the processor 170 can determine that a specific intent associated with an AI execution request is not identified in the user utterance to operate in the existing TV mode (S1405). On the contrary, when the execution item is a generative AI execution, the processor 170 can determine that a specific intent associated with the AI execution request is identified in the user utterance.

When it is determined that a specific intent associated with the AI execution request is identified in the user utterance, the processor 170 can further check an execution parameter value (S1406). When a result of the check, when the execution parameter is a first execution mode, the processor 170 can trigger a first generative AI execution mode (S1407), and output a first generative AI execution screen (S1408). The first generative AI execution screen can be an AI image generation guide screen. On the contrary, when the execution parameter is a second execution mode, the processor 170 can trigger a second generative AI execution mode (S1409), and output a second generative AI execution screen (S1410). The second generative AI execution screen can be an AI image generation idea acquisition screen.

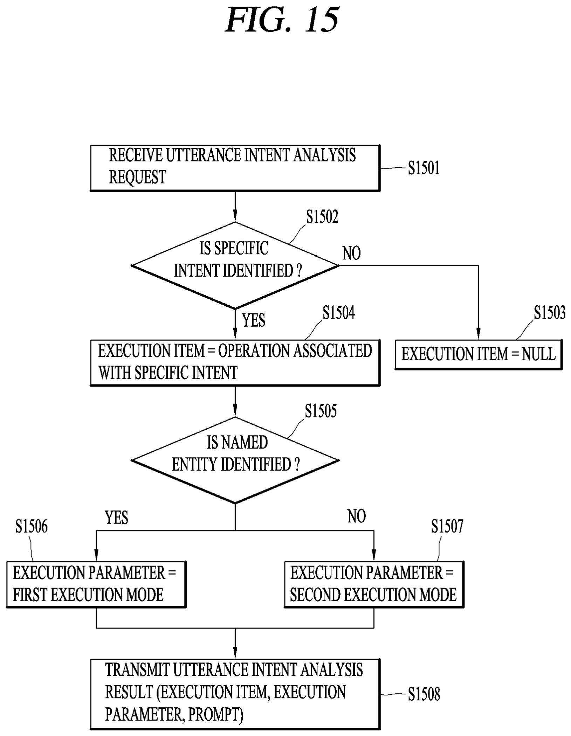

Hereinafter, a method for analyzing a user's utterance data and providing an utterance intent analysis result in an NLP server according to the present disclosure will be described. In this regard, FIG. 15 is an operational flowchart showing a method for analyzing a user's utterance data to provide an utterance intent analysis result in an NLP server according to the present disclosure. Referring to FIGS. 1 to 15, a method for analyzing a user's utterance data and providing an utterance intent analysis result can be performed by the processor 330 of the NLP server 300.

The processor 330 of the NLP server 300 can receive a request for utterance intent analysis from the display device 100 (S1501). The request for utterance intent analysis can include a user utterance.

The processor 330 of the server 300 can perform intent analysis of utterance data through morphological analysis, syntactic analysis, semantic analysis, and discourse analysis of the utterance data using a language model 340. The processor 330 can determine whether a specific intent is identified in the user utterance as a result of performing intent analysis (S1502).

As a result of the determination, when a specific intent is not identified in the user utterance, the processor 330 can set the execution item to NULL (S1503). As a result of the determination, when a specific intent is identified in the user utterance, the processor 330 can set the execution item as an operation to be executed in association with the specific intent (S1504). In this regard, when a specific intent associated with generative AI is identified in the user utterance, the processor 330 can set the execution item to a generative AI execution.

Next, the processor 330 can determine whether a named entity associated with a specific intent is further identified in the user utterance as a result of performing intent analysis (S1505). As a result of the determination, when the named entity associated therewith is further identified, the processor 330 can set the execution parameter to a first execution mode (S1506). As a result of the determination, when the named entity associated therewith is no longer identified, the processor 330 can set the execution parameter to a second execution mode (S1507).

The processor 330 can transmit an utterance intent analysis result to the display device 100 through the communication interface 310 (S1508). The utterance intent analysis result can include an execution item and an execution parameter. When both the specific intent and the associated entity are identified in the user utterance, the utterance intent analysis result can further include a prompt corresponding to the user utterance.

Meanwhile, a method for providing a generative AI screen according to a use utterance performed by a display device according to another aspect of the present disclosure is not limited thereto, and can be applied in various ways in combination with the embodiments of FIGS. 1 to 15.

In the above, a display device for providing a generative AI screen based on a user utterance according to the present specification and an AI system including the same have been described. The technical effects of a display device for providing a generative AI screen according to a user utterance according to this specification and an AI system including the same can be summarized as follows, but are not limited thereto.

According to this specification, a customized AI execution screen associated with a user's intent can be provided when generating an AI image by utilizing a digital TV. A generative AI execution screen associated with a user utterance can be provided without requiring the user to provide a separate additional input after executing an AI application. A user's intent can be analyzed only by a user utterance to provide a corresponding detailed screen, thereby improving user convenience in AI image generation.

According to this specification, a user can conveniently generate an image by utilizing recommended keywords provided without having to write or modify a prompt on his or her own. In addition, keywords can be determined in an input prompt by utilizing AI and highlighted along with recommended keywords associated therewith, thereby allowing core keywords to be intuitively recognized within the prompt.

According to this specification, a prompt including specific and diverse elements for generating an AI image can be generated. Various recommended keywords can be provided based on a user input prompt, thereby generate images that are similar to and richer than an image desired by a user.

According to this specification, a customized prompt according to a user preference can be provided when generating an AI image. In addition, a user can utilize his or her own generated and modified AI image as a standby screen of a display device, thereby allowing a more personalized product experience.

Meanwhile, a display device for updating a prompt by providing keyword highlights and recommended keywords according to this specification can be referred to as an AI concierge that performs an AI function. A display device can identify core keywords in a prompt corresponding to a user utterance for image generation and provide recommended keywords associated therewith. A display device can provide a recommended keyword list optimized for a user by referring to the user's previous AI image generation information. In addition, a display device can generate and provide a customized AI image based on an input prompt in consideration of a preference for each user. Due to this, a user can easily write and modify a prompt by utilizing recommended keywords provided by a display device without having to write or modify the prompt in detail on his or her own.

In addition, a display device can provide a random prompt function to provide various AI image generation services. In this regard, a user can be provided with idea keywords and a random prompt based on the idea keywords to conveniently generate a desired image by modifying the random prompt.

The foregoing present disclosure can be implemented as computer-readable codes on a program-recorded medium. The computer-readable medium can include any type of recording device in which data readable by a computer system is stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device and the like, and also include a device implemented in the form of a carrier wave (e.g., transmission over the Internet). The computer can include the controller of the terminal. Therefore, the detailed description should not be limitedly construed in all of the aspects, and should be understood to be illustrative. The scope of the present disclosure should be determined by reasonable interpretation of the appended claims, and all changes that come within the equivalent scope of the present disclosure are included in the scope of the present disclosure.

## Claims

1. A display device (100) for providing a generative AI screen based on a user utterance, the display device (100) comprising:
a voice recognition processing module (175) configured to receive a user utterance following a key input of a specific button into a remote control device (200);
a display (180) configured to display a generative AI execution screen associated with the user utterance; and
a processor (170) configured to determine the utterance intent of the user utterance and display a generative AI execution screen corresponding to the utterance intent on the display (180),
wherein the processor (170) is configured to:
determine whether a specific intent associated with generative AI and a named entity associated with the specific intent are identified in the user utterance; and
display a first generative AI execution screen in a first generative AI execution mode or a second generative AI execution screen in a second generative AI execution mode on the display (180) according to a result of the determination.

2. The display device (100) of claim 1, wherein the processor (170) is configured to:
display, when both the specific intent and the named entity associated with the specific intent are identified in the user utterance, the first generative AI execution screen on the display (180); and
display, when only the specific intent is identified in the user utterance, the second generative AI execution screen on the display (180).

3. The display device (100) of claim 1, wherein the processor (170) comprises:
a natural language processing (NLP) client module (171) configured to acquire an utterance intent analysis result for the user utterance in conjunction with a natural language processing (NLP) server (300), and
wherein the utterance intent analysis result comprises at least one of:
an execution item representing an operation to be executed in association with the specific intent;
an execution parameter indicating whether the specific intent and the named entity associated with the specific intent are identified in the user utterance; and
a prompt corresponding to the user utterance.

4. The display device (100) of claim 3, wherein the processor (170) further comprises:
a generative AI control module (172) and a generative AI output module (173),
wherein the generative AI control module (172) is configured to:
receive the utterance intent analysis result from the NLP client module (171); and
trigger the first generative AI execution mode or the second generative AI execution mode based on the execution item and execution parameter included in the utterance intent analysis result, and
wherein the generative AI output module (173) is configured to:
display, in response to a trigger for the first generative AI execution mode or the second generative AI execution mode, a generative AI execution screen corresponding to each mode on the display (180).

5. The display device (100) of claim 4, wherein the generative AI control module (172) is configured to:
trigger, when the execution item is a generative AI execution and the execution parameter is a first execution mode, the first generative AI execution mode by determining that both a specific intent associated with the generative AI execution and a named entity associated with the specific intent are identified in the user utterance; and
trigger, when the execution item is a generative AI execution and the execution parameter is a second execution mode, the second generative AI execution mode by determining that only the intent associated with the generative AI execution is identified in the user utterance.

6. The display device (100) of claim 5, wherein the generative AI output module (173) is configured to:
execute, in response to a trigger for the first generative AI execution mode, a generative AI application to display the first generative AI execution screen related to both the specific intent and the named entity on the display (180); and
execute, in response to a trigger for the second generative AI execution mode, a generative AI application to display the second generative AI execution screen related to the specific intent on the display (180).

7. The display device (100) of claim 6, wherein the first generation AI execution screen is an AI image generation guide screen, comprising a prompt (610) corresponding to the user utterance; and a recommended entity keyword list (621) associated with the named entity, and, the second generation AI execution screen is an AI image generation idea acquisition screen, comprising:
one or more recommended words for AI image generation.

8. The display device (100) of claim 7, wherein a keyword (611) corresponding to the named entity is highlighted in the prompt (610).

9. The display device (100) of claim 6, wherein the generative AI control module (172) is further configured to acquire a recommended keyword list (920) associated with the named entity in conjunction with a generative AI server (400),
wherein the generative AI output module (173) is configured to:
transmit, in response to a trigger for the first generative AI execution mode, a recommended keyword request including the named entity prior to displaying the first generative AI execution screen on the display (180), and
wherein the generative AI control module (172) is configured to:
transmit the received recommended keyword request to the generative AI server (400) to generate a recommended keyword list (920) associated with the named entity;
receive, in response to the request, a recommended keyword list (920) associated with the named entity from the generative AI server (400); and
transmit the recommended keyword list (920) to the AI output module (173) to be displayed on the display (180).

10. The display device (100) of claim 9, wherein the recommended keyword list (920) comprises:
at least one of a recommended entity keyword list (921) corresponding to the named entity, a recommended background keyword list (922) associated with the named entity, and a recommended style keyword list (923) associated with the named entity.

11. The display device (100) of claim 10, wherein the generative AI output module (173) is configured to:
update, when one recommended keyword is selected from the recommended entity keyword list (921), the prompt (910) by replacing a keyword (911) corresponding to the selected recommended keyword in the prompt (910) with the selected recommended entity keyword (931); update, when one recommended keyword is selected from the recommended background keyword list (922) or the recommended style keyword list (923), the prompt (910) to further include the selected recommended keyword; and
display the updated prompt (930) on the display (180).

12. The display device (100) of claim 7, wherein the generative AI output module (173) is configured to:
generate, when one recommended word is selected from among the one or more recommended words, a random prompt associated with the recommended word; and
transmit a recommended keyword request including the random prompt to the generative AI control module (172).

13. The display device (100) of claim 12, wherein the generative AI control module (172) is configured to:
transmit the received recommended keyword request to the generative AI server (400) to make a request to determine at least one or more highlight keywords in the random prompt, and generate recommended keyword lists associated with the determined highlight keywords;
receive, in response to the request, at least one or more highlight keywords (1011) and recommended keyword lists (1020) based on the random prompt from the generative AI server (400); and
transmit the one or more highlight keywords (1011) and recommended keyword lists (1020) to the AI output module (173), and
wherein the generative AI output module (173) is configured to:
highlight parts associated with the highlight keywords (1011) in the random prompt and the recommended keyword list (1020); and
display the highlighted random prompt (1010) and recommended keyword list (1020) on the display (180).

14. The display device (100) of claim 7, wherein the generative AI control module (172) is configured to:
generate, in response to a key input or voice input into a remote control device (200) associated with an image generation request, an image generation request including the prompt (1110);
transmit the image generation request to the generative AI server (400) so as to generate an AI image based on the prompt (1110);
receive, in response to transmitting the image generation request, an image storage location representing a location where the AI image (1120) is stored from the generative AI server (400);
access, based on the image storage location, a separate database to download the AI image (1120); and
store the downloaded AI image (1120) in a database of the display device (100), and transmit it to the generative AI output module (173) so as to be displayed on the display (180) along with the prompt (1110).

15. The display device (100) of claim 14, wherein the generative AI output module (173) is configured to:
display the AI image as a standby screen of the display (180) in response to a key input or voice input into a remote control device (200) associated with a request to set a standby mode.
